# EUROPEAN PATENT SPECIFICATION

(11) **EP 2 021 863 B1**
(45) Date of publication and mention of the grant of the patent: **06.11.2013**
(21) Application number: 06741465.6
(22) Date of filing: 11.05.2006
(51) Int. Cl.: G02C 5/10, G02C 5/22, G02C 5/14, G02C 5/00

(54) **HINGE FOR SPECTACLES**
GELENK FÜR BRILLEN
CHARNIÈRE POUR LUNETTES

(43) Date of publication of application: 11.02.2009
(73) Proprietor: Gosselin Marketing Inc., Drummondville QC J2A 1T2 (CA)
(72) Inventor: Chagny, Yves, 01100 Arbent (FR); Richard, Louis, Drummondville, QC J2C 6H2 (CA)
(74) Representative: Reinhardt, Harry
(86) International application number: PCT/CA2006/000750
(87) International publication number: WO 2007/131313

(56) References cited:
- EP-A- 1 376 201
- CA-A1- 2 018 533
- CA-A1- 2 439 558
- CA-A1- 2 487 910
- DE-U1- 20 316 953
- FR-A- 2 700 397
- US-A- 5 386 254
- US-A- 5 408 279
- US-A- 5 646 708
- US-A- 6 145 985
- US-B1- 7 055 953

## Description

### FIELD OF THE INVENTION

The present invention relates to a hinge for use on spectacles comprising a front fame for carrying lenses and a pair of temples.

The invention also relates to spectacles comprising such a hinge.

### BACKGROUND OF THE INVENTION

As is shown in EP 1 376 201 A (Decover [FR]) 2 January 2004 and in CA 2 439 558 (Optique Lecavalier [CA]) 4 March 2005, it is known to provide flexible resilient members to link the temples of spectacles to the front frame thereof. These flexible resilient members allow a hinged attachment of the temples to the spectacle frame, thus allowing the temples to be pivoted between an inward stored position in which the temples extend parallel to and along the frame, and an operative position in which the temples extend perpendicularly to and away from the frame to engage the wearer's head above his ears. The flexible resilient hinges have the advantage of further allowing the temples to be pivoted outwardly away from the spectacles frame beyond their operative position without damaging the hinge. This is useful in cases where the temples are accidentally moved beyond their operative position, to prevent the hinge, the temples and/or the frame from being damaged.

These resilient hinges also offer a spring-back effect that will continuously bias the temples towards the respective sides of the head of the person wearing the spectacles, which helps to securely hold the spectacles against the wearer's head. Some such spectacles with temples having this spring-back effect are called sports glasses due to the fact that they will hold on to the wearer's head even under sudden movements of the head such as those that occur during sporting activities.

### SUMMARY OF THE INVENTION

The present invention relates to a hinge for use on spectacles of the type comprising a front frame for carrying lenses and a pair of temples, according to claim 1.

In one embodiment, said first and second resilient portions are made of a polymeric material having an intrinsic resiliency.

In one embodiment, said intermediate portion comprises a rigid metallic piece extending between said first and second resilient portions and attached thereto.

In one embodiment, said hinge further comprises a unitary flexible resilient member defining first and second ends and reinforced with a rigid element fixedly attached to said unitary resilient member between and spaced from said first and second ends, with said first resilient portion being defined between said first end and said rigid element, with said second resilient portion being defined between said second end and said rigid element, and with said rigid intermediate portion being defined at the position of said rigid element.

In one embodiment, said first and second attachment devices comprise tenon and mortise joint means for engagement with complementary tenon and mortise joint means provided on the temple and the frame, respectively.

In one embodiment, said hinge further comprises a pair of grooves each provided on either side of and adjacent said intermediate portion allowing said first and second resilient portions to collapse towards and against said intermediate portion.

The present invention further relates to spectacles comprising a front frame for carrying lenses, a pair of temples and a pair of hinges according to claim 1 each linking a corresponding one of said temples to said frame, wherein each said temple can be pivoted with its corresponding said hinge relative to said frame between a stored position in which said temple is unbiased by said hinge and in which said temple is pivoted adjacent to said frame; an operative position in which said temple is pivoted away from said frame, is substantially perpendicular to said frame and is biased towards said stored position under the effect of a first spring- back biasing force exerted by said first and second resilient portions; and a spread out position in which said temple is pivoted outwardly away from said frame beyond said operative position and is biased towards said stored position under the effect of a second spring-back biasing force exerted by said first and second resilient portions, with said second spring-back biasing force being greater than said first spring-back biasing force.

### DESCRIPTION OF THE DRAWINGS

In the annexed drawings:
Figure 1 is a bottom plan view of the spectacles according to a first embodiment of the present invention, showing the temples in full lines in their operative position, and further showing in phantom lines the temples in two alternate positions, namely in a stored and in a spread out position;
Figure 2 is an enlarged view of the area circumscribed by circle II of figure 1;
Figure 3 is a partial top and front perspective view of the spectacles of figure 1, including one temple, one hinge and part of the front frame;
Figure 4 is a partial top and rear perspective view at an enlarged scale of the spectacles of figure 1, including one hinge and the adjacent parts of the front frame and corresponding temple;
Figure 5 is a cross-sectional view of the hinge only of the spectacles, taken along line V-V of figure 4;
Figure 6 is similar to figure 4, but pertains to an alternate embodiment of the invention; and
Figure 7 is an enlarged cross-sectional view of the hinge only of the spectacles of figure 6, taken along line VII-VII of figure 6.

### DETAILED DESCRIPTION OF THE EMBODIMENTS

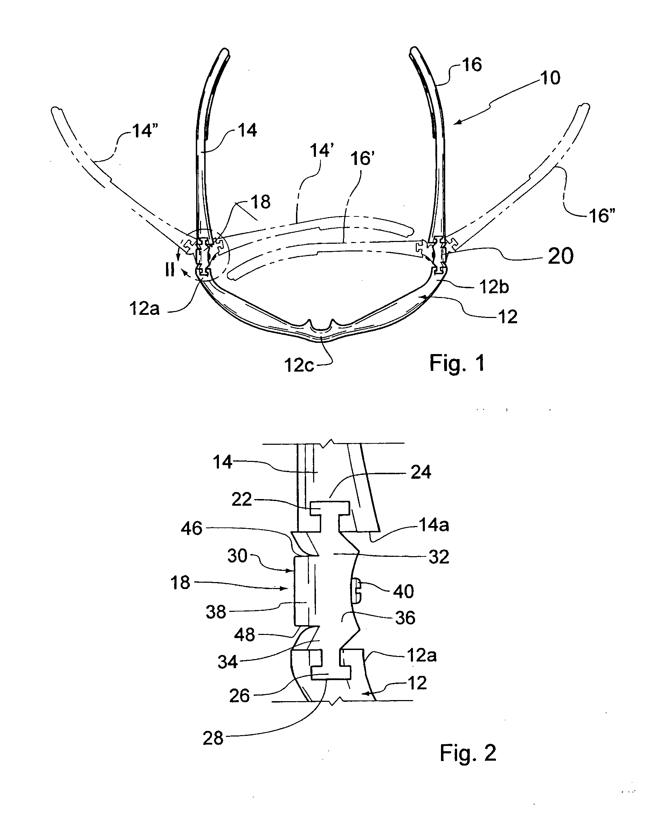

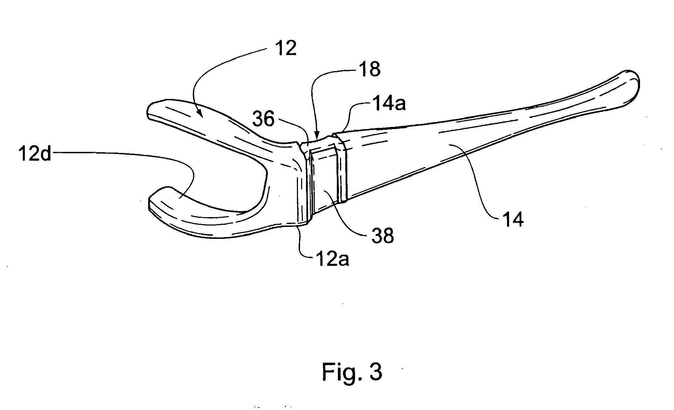

Figures 1-5 show a first embodiment of spectacles 10 according to the invention, that comprise a front frame 12 for carrying lenses (not shown), a pair of temples 14, 16 and a pair of hinges 18, 20 each linking a corresponding one of temples 14, 16 to frame 12. Front frame 12 is of a conventional shape, and defines opposite first and second extremities 12a, 12b, a nose bridge 12c and first and second lens openings 12d, 12e for carrying selected lenses therein. Frame 12 may be arcuate, as illustrated, or flat, or other suitable shape, such that frame 12 forms a general plane adapted to fit over the nose and ahead of the wearer's eyes.

Each hinge 18, 20, for example hinge 18 shown in figures 1-3 and 5, comprises a first attachment device attaching hinge 18 to its corresponding temple 14, in the form of a tenon and mortise joint means that includes a tenon or cross-sectionally T-shaped lip 22 that engages a complementary tenon and mortise joint means in temple 14 in the form of a mortise or cross-sectionally T-shaped slot 24 made in the temple extremity 14a attached to adjacent frame extremity 12a. It is understood that the tenon and mortise joint means could be inverted, i.e. the protruding lip could be provided on the temple and the slot could be provided on the hinge; and more generally, any other suitable male-female attachment device can be envisioned including for example any similar male and female dovetail interlock joint means, of various shapes, or any suitable adhesive or small bolts, provided they do not hamper pivotal capability of temple 14 relative to frame 12 about hinge 18 as above noted.

Hinge 18 also comprises a second attachment device attaching hinge 18 to the corresponding extremity 12a of frame 12, in the form of a tenon and mortise joint means that includes a tenon or cross-sectionally T-shaped lip 26 that engages a complementary tenon and mortise joint means in frame 12 in the form of a mortise or cross-sectionally T-shaped slot 28 made in the frame extremity 12a attached to temple 14. It is understood that the tenon and mortise joint means could be inverted, i.e. the protruding lip could be provided on the frame and the slot could be provided on the hinge; and more generally, any other suitable male-female attachment device can be envisioned including for example any similar male and female dovetail interlock joint means, of various shapes, provided they do not hamper pivotal capability of temple 16 relative to frame 12 about hinge 18 as above noted, or any suitable adhesive or small bolts.

In the embodiment shown in figures 1-5, slots 24, 28 respectively made in temple 14 and frame 12 are opened at the underside of spectacles 10 and are close-ended, in that they do not extend for the full height of temple 14 and frame 12. Consequently, lips 22 and 26 can be upwardly slidably inserted in their respective slots 24 and 28 from underneath, with lips 22, 26 abutting against the closed ends of slots 24, 28. The engagement of lips 22, 26 in slots 24, 28 is preferably of the friction fit type engagement, to prevent lips 22, 26 from accidentally sliding our of slots 24, 28.

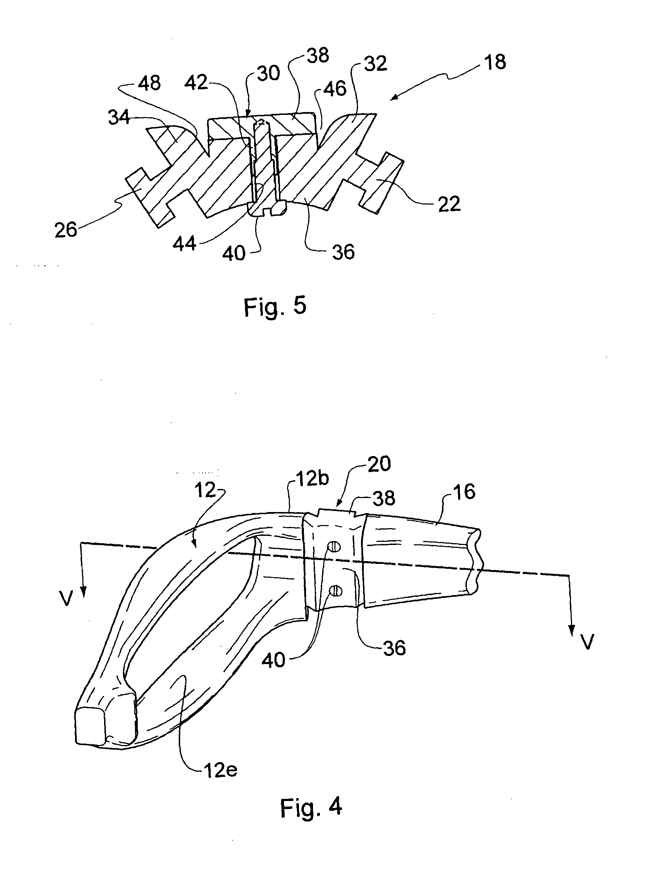

Hinge 18 also defines a rigid intermediate portion 30, a first flexible resilient portion 32 carrying lip 22 and a second flexible resilient portion 34 carrying lip 26. More particularly, in the embodiment of figures 1-5, hinge 18 comprises a unitary resilient member 36 that extends between temple 14 and frame 12, including lip 22 at a first end and lip 26 at a second end of resilient member 36. A rigid element in the form of a rigid, flat, vertical metallic plate 38 is fixedly attached to unitary resilient member 36 between and spaced from its first and second ends, facing outwardly of spectacles 10. The first resilient portion 32 is more particularly defined between rigid plate 38 and the resilient member first end at lip 22; the second resilient portion 34 is more particularly defined between rigid plate 38 and the resilient member second end at lip 26; and the rigid intermediate portion 30 is more particularly defined at the position of rigid plate 38. Rigid plate 38 is attached to the unitary resilient member 36 by means of a pair of screws 40 that are driven through resilient member 36 and into complementary threaded sockets 42 integrally attached to rigid plate 38 and that extend within holes 44 made through resilient member 36 (see particularly figure 5).

Hinge 18 further comprises a pair of grooves 46, 48 made in resilient member 36 and each provided on either side of and adj acent intermediate portion 30, facing outwardly of spectacles 10.

It is understood that hinge 20 is a mirror image of hinge 18, and consequently although hinge 20 is not detailed herein, it is understood that the present description of hinge 18 also applies to hinge 20.

In one embodiment, the first and second resilient portions 32, 34, of hinges 18, 20, are made of a polymeric material having an intrinsic resiliency, such as rubber. One material which may be used is the thermoplastic elastomer sold under the registered trade-mark FORPRENE, by the company So.F.Ter. Spa located in Forli, Italy.

In use, spectacles 10 are assembled by friction-fitting the lips 22, 26 of hinges 18, 20 into the corresponding temple openings 24 and front frame openings 28 respectively as described hereinabove, to hingedly attach temples 14, 16 to front frame 12. More particularly, as suggested in figure 1, temples 14, 16 are hinged to frame 12 in such a way as to allow temples 14, 16 to pivot between:
a) a stored position shown in phantom lines at 14', 16' in figure 1, in which temples 14, 16, are pivoted towards and are positioned generally parallel to the general plane of front frame 12, and in which hinges 18, 20 are in a rest position (shown in figure 5 for example), i.e. hinges 18, 20 do not bias temples 14,16 towards or away from front frame 12;
b) an operative position shown in full lines at 14, 16 in figure 1, in which temples 14,16, are pivoted away from and are positioned generally perpendicular to the general plane of front frame 12 for engaging a wearer's head over his ears as known in the art, and in which hinges 18, 20 are in slightly compressed compared to their rest position and continuously bias temples 14, 16 towards their rest position due to the intrinsic resiliency of the hinge resilient portions 32 and 34, thus allowing for a more stable engagement of spectacles 10 on the wearer's head; and
c) a spread out position shown in phantom lines at 14", 16" in figure 1, in which temples 14, 16, are pivoted outwardly away from their operative position and yet further away from frame 12, and in which hinges 18, 20 significantly bias temples 14, 16 inwardly towards their rest position.

It can be seen that each hinge 18, 20, for example hinge 18 as shown in figure 5, is designed to promote the two-tiered biasing force distribution suggested hereinabove according to the angular position of its corresponding temple 14. Indeed, in the rest position of hinge 18, resilient member 36 naturally forms an elbow with lips 22, 26 extending in divergent directions. Consequently, if no outside force is exerted on temple 14, it will adopt its stored position. This is desirable, since having the temples 14, 16 extending along frame 12 in a stored position provides a more compact shape to spectacles 10 that favors easy storing thereof and reduces likelihood of accidental damage thereto.

However, as temple 14 is pivoted away from its rest position and towards its operative position, resilient member 36 will bend, mainly at grooves 46, 48 that offer a weaker resistance area on resilient member 36, with the first and second resilient portions 32, 34 collapsing towards rigid intermediate portion 30. The latter, being reinforced by rigid plate 38, will not compress. Thus, a first spring-back biasing force is then exerted on temple 14 by hinge 18, which first spring-back biasing force is calibrated to offer a desirable inwardly oriented pressure against a person's head around that person's ears when spectacles 10 are worn.

It is further desirable to allow temple 14 to be pivoted further outwardly away from its operative position, for example into the spread out position shown at 14", 16". In such an angular position of temple 14 outwardly beyond its operative position, the first and second resilient portions 32, 34 of hinge 18 have collapsed against rigid intermediate portion 30, and the angular displacement of temple 14 beyond its operative position is allowed by the compression of first and second resilient portions 32, 34 between the temple extremity 14a and the rigid plate-reinforced intermediate hinge portion 30. This compression of first and second resilient portions 32, 34 provides a second spring-back biasing force which is greater than the above-mentioned first spring-back biasing force.

This second spring-back biasing force of greater value than that of the first spring-back biasing force is desirable to ensure that temple 14 will move back towards the wearer's head with haste if it is accidentally pulled away, which is especially advantageous on sports glasses. However, one would not want such a powerful spring-back biasing force applied to temple 14 at all times since it would then become uncomfortable for the wearer of spectacles 10 who would feel considerable pressure against the sides of his head. Also, allowing temple 14 to pivot outwardly beyond its operative position into a spread-out position, is desirable since it prevents hinge 18, temple 14 and/or frame 12 from being damaged or broken if temple 14 is accidentally pulled outwardly away beyond its operative position.

It can be seen that throughout the pivotal displacement of temple 14 from its operative position towards its spread out position, the hinge rigid intermediate portion 30 will provide a seat against which first and second resilient portions 32, 34 may abut.

It is understood that grooves 46, 48 are facultative. In the absence of grooves 46, 48, a resilient member 36 could be designed having a geometry allowing for a gradual increase of the spring-back biasing force exerted by hinge 18 as temple 14 is pivoted away from its stored position. The optimal angular value of temples 14", 16" at their spread-out position is a large acute angle relative to their operative position 14,16, generally perpendicular to frame 12, preferably between 30 and 60°, and most preferably about 45° .

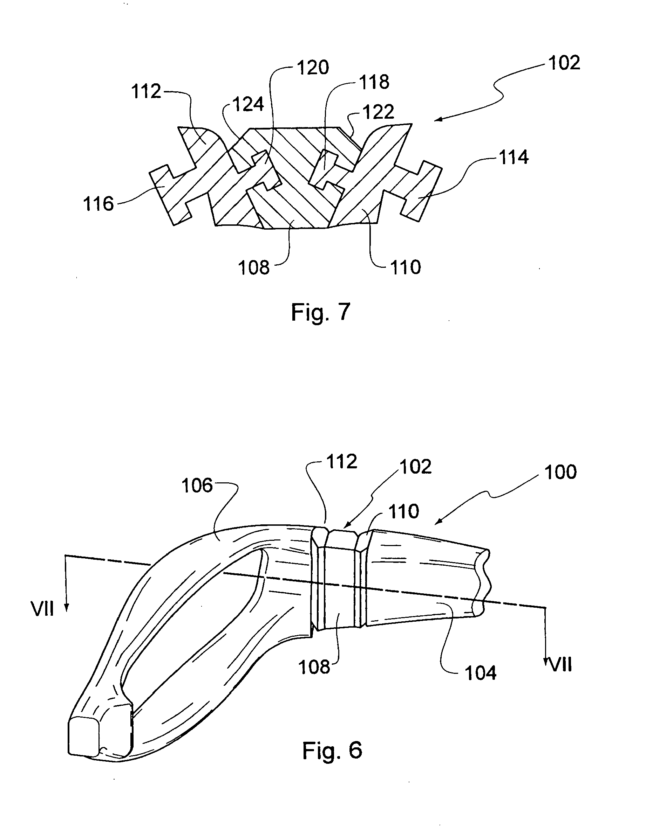

Figures 6 and 7 show another embodiment of the present invention, which is similar to the embodiment shown in figures 1-5 except as noted hereinafter.

In the embodiment of figures 6-7, spectacles 100 comprise a hinge 102 linking the temple 104 to the front frame 106. Hinge 102, similarly to hinges 18, 20 of the first embodiment, comprises a rigid intermediate portion 108 flanked by first and second flexible resilient portions 110, 112 located on either side of intermediate portion 108. First and second resilient portions 110, 112 are respectively provided with first and second tenon and mortise joint means 114, 116 that cooperate with respective complementary tenon and mortise joint means (not shown) provided on temple 104 and on frame 106 for attaching hinge 102 to temple 104 and to frame 106, thereby effectively hingedly attaching temple 104 to frame 106.

According to the second embodiment of the invention, hinge 102 comprises an intermediate portion 108 made from a rigid metallic piece extending between first and second resilient portions 110,112 and attached thereto by means of additional tenon and mortise joint means 118, 120. Thus, the hinge 102 of the second embodiment is not made of a unitary resilient member as per the first embodiment, but rather from a pair of distinct first and second resilient members that form the first and second resilient portions 110, 112, and from a rigid metallic piece attached between and linking the first and second resilient members.

Similarly to the first embodiment shown in figures 105, grooves 122, 124 may be provided on the outer surface (relative to the entire spectacles 100) of hinge 102, to facilitate the resilient pivotal displacement of temple 104 relative to frame 106 between the stored position and the operative position of temple 104. However, when temple 104 reaches its operative position in which it extends substantially perpendicularly to frame 106, first and second resilient portions 110, 112 have collapsed and become seated against rigid intermediate portion 108 to increase the elastic resistance of any further outward pivotal displacement of temple 104 beyond its operative position towards a spread out position.

It has been found that with either type of the above noted embodiments of hinges according to the present invention, an unexpectedly large increase in resistance to wear and in sturdiness were obtained. Accordingly, eyewear integrating these temple hinges should be much more longer lasting than prior art eyewear.

Any further modification obvious for someone skilled in the art is considered to be included herein, as may be ascertained from the appended claims.

## Claims

1. A hinge (18, 20) for use on spectacles (10) comprising a front frame (12) for carrying lenses and a pair of temples (14, 16), wherein said hinge comprises a first attachment device (22) for attaching said hinge to a corresponding one of the temples; a second attachment device (26) for attaching said hinge to said frame; **characterized in that** a rigid intermediate portion (30) comprising a rigid inflexible member (38); a flexible first resilient portion (32) carrying said first attachment device (22) and attached to said rigid intermediate portion; and a flexible second resilient portion (34) carrying said second attachment device (26) and attached to said rigid intermediate portion opposite said first resilient portion.

2. The hinge as defined in claim 1, wherein said first resilient portion (32) and said second resilient portion (34) are made of a polymeric material having an intrinsic resiliency.

3. The hinge as defined in claim 2, wherein said intermediate portion (30) comprises a rigid metallic piece (38) extending between said first resilient portion and said second resilient portion and attached thereto.

4. The hinge as defined in claim 1, further comprising a flexible unitary resilient member (36) defining first and second ends and reinforced with a rigid element fixedly attached to said unitary resilient member between and spaced from said first and second ends, with said first resilient portion being defined between said first end and said rigid element, with said second resilient portion being defined between said second end and said rigid element, and with said rigid intermediate portion being defined at the position of said rigid element.

5. The hinge as defined in claim 1, wherein the temples (14, 16) and the frame (12) comprise complimentary tenon and mortise joint means (24, 28), respectively, and wherein said first attachment device and said second attachment device comprise tenon and mortise joint means (22, 26) for interlock engagement with the complementary tenon and mortise joint means provided on the temple and the frame, respectively.

6. The hinge as defined in claim 1, further comprising a pair of grooves (46, 48) each provided on either side of an adjacent said intermediate portion allowing said first resilient portion and said second resilient portion to collapse towards and against said intermediate portion.

7. Spectacles (10) comprising a front frame (12) for carrying lenses over the nose of a wearer, a pair of temples (14, 16) and a pair of hinges (18, 20) according to claim 1, each linking a corresponding one of said temples to said frame, wherein each of said temples can be pivoted with its corresponding one of said hinges relative to said frame between a stored position, in which said temple is unbiased by said hinge and in which said temple is pivoted adjacent to said frame; an operative position in which said temple is pivoted away from said frame, is substantially perpendicular to the general plane of said frame and is biased towards said stored position under the effect of a first spring-back biasing force exerted by said first resilient portion and said second resilient portion; and a spread out position, in which said temple is pivoted outwardly away from said frame beyond said operative position and is biased towards said stored position under the effect of a second spring-back biasing force exerted by said first and second resilient portions, with said second spring-back biasing force being greater than said first spring-back biasing force.

8. Spectacles as defined in claim 7, wherein said first resilient portion (32) and said second resilient portion (34) are made of a polymeric material having an intrinsic resiliency.

9. Spectacles as defined in claim 8, wherein said intermediate portion (30) comprises a flexible rigid metallic piece (38) extending between said first resilient portion and said second resilient portion and attached thereto.

10. Spectacles as defined in claim 7, further comprising a flexible unitary resilient member (36) defining first and second ends and reinforced with a rigid element fixedly attached to said unitary resilient member between and spaced from said first and second ends, with said first resilient portion being defined between said first end and said rigid element, with said second resilient portion being defined between said second end and said rigid element, and with said rigid intermediate portion being defined at the position of said rigid element.

11. Spectacles as defined in claim 7, wherein said first attachment device (22) and said second attachment device (26) comprise tenon and mortise joint means engaged interlockingly with complementary tenon and mortise joint means provided on said temple and said frame, respectively.

12. Spectacles as defined in claim 7, further comprising a pair of grooves (46, 48) each provided on either side of an adjacent said intermediate portion allowing said first resilient portion and said second resilient portion to collapse towards and against said intermediate portion.

13. Spectacles as defined in claim 7, wherein said spread out position of each of said temple (14, 16) forms an acute angle relative to said operative position thereof.

14. Spectacles as in claim 13, wherein the optimal value of said acute angle ranges between 30 and 60 °.

15. Spectacles as in claim 14, wherein said optimal value of said acute angle is about 45°.

## Patentansprüche

1. Gelenk (18, 20) zur Verwendung an Brillen (10), die einen Frontrahmen (12) zum Tragen der Gläser bzw. Linsen und ein Paar Bügel (14, 16) aufweisen, wobei das Gelenk eine erste Befestigungseinrichtung (22) zur Befestigung des Gelenks an einem entsprechenden der Bügel; eine zweite Befestigungseinrichtung (26) zur Befestigung des Gelenks am Rahmen aufweist; **dadurch gekennzeichnet, dass** es einen starren Zwischenabschnitt (30) mit einem starren unflexiblen Element (38); einen flexiblen ersten elastischen Abschnitt (32), der die erste Befestigungseinrichtung (22) trägt und an dem starren Zwischenabschnitt angebracht ist; und einem flexiblen zweiten elastischen Abschnitt (34) aufweist, der die zweite Befestigungseinrichtung (26) trägt und an dem starren Zwischenabschnitt gegenüberliegend zu dem ersten elastischen Abschnitt angebracht ist.

2. Gelenk nach Anspruch 1, wobei der erste elastische Abschnitt (32) und der zweite elastische Abschnitt (34) aus einem polymeren Material mit einer intrinsischen Elastizität bzw. Rückstellkraft hergestellt sind.

3. Gelenk nach Anspruch 2, wobei der Zwischenabschnitt (30) ein starres metallisches Stück (38) aufweist, das sich zwischen dem ersten elastischen Abschnitt und dem zweiten elastischen Abschnitt erstreckt und daran angebracht ist.

4. Gelenk nach Anspruch 1, wobei es ferner ein flexibles einstückiges Element (36) aufweist, das erste und zweite Enden definiert und mit einem starren Element verstärkt ist, das fest an dem einstückigen elastischen Element zwischen und beabstandet von den ersten und zweiten Enden angebracht ist, wobei der erste elastische Abschnitt zwischen dem ersten Ende und dem starren Element definiert ist, wobei der zweite elastische Abschnitt zwischen dem zweiten Ende und dem starren Element definiert ist und wobei der starre Zwischenabschnitt an der Position des starren Elements definiert ist.

5. Gelenk nach Anspruch 1, wobei die Bügel (14, 16) bzw. der Rahmen komplementäre Schlitz- und Zapfengelenkmittel (24, 28) aufweisen und wobei die erste Befestigungseinrichtung und die zweite Befestigungseinrichtung Schlitz- und Zapfengelenkmittel (22, 26) zum verriegelnden Eingriff mit den komplementären Schlitz- und Zapfengelenkmitteln aufweisen, die am Bügel bzw. am Rahmen vorgesehen sind.

6. Gelenk nach Anspruch 1, wobei es ferner ein Paar Nuten (46, 48) aufweist, die jeweils auf jeder Seite benachbart zum Zwischenabschnitt vorgesehen sind und dem ersten elastischen Abschnitt und dem zweiten elastischen Abschnitt gestatten, in Richtung auf und gegen den Zwischenabschnitt zusammen zu klappen.

7. Brille (10) mit einem Frontrahmen (12) zum Tragen von Gläsern bzw. Linsen auf der Nase eines Trägers, einem Paar Bügeln (14, 16) und einem Paar Gelenken (18, 20) nach Anspruch 1, die jeweils einen entsprechenden der Bügel mit dem Rahmen gelenkig verbinden, wobei jeder der Bügel mit seinem entsprechend einem der Gelenke relativ zum Rahmen zwischen einer Lagerposition, in der der Bügel von dem Gelenk unbelastet ist und in der der Bügel benachbart zum Rahmen geschwenkt ist; einer operativen Position, in der der Bügel vom Rahmen weggeschwenkt ist, sich im Wesentlichen im rechten Winkel zu einer allgemeinen Ebene des Rahmens befindet und in Richtung auf die Lagerposition unter der Wirkung einer ersten rückfedernden Spannkraft gespannt ist, die durch den ersten elastischen Abschnitt und den zweiten elastischen Abschnitt ausgeübt wird; und einer ausgespreizten Position geschwenkt werden kann, in der der Bügel nach außen weg vom Rahmen über die operative Position hinausgeschwenkt ist und in Richtung auf die Lagerposition unter der Wirkung einer zweiten rückfedernden Spannkraft gespannt ist, die von dem ersten und zweiten elastischen Abschnitt ausgübt wird, wobei die zweite rückfedernde Spannkraft großer ist als die erste rückfedernde Spannkraft.

8. Brille nach Anspruch 7, wobei der erste elastische Abschnitt (32) und der zweite elastische Abschnitt (34) aus einem polymeren Material mit einer intrinsischen Elastizität bzw. Rückstellkraft hergestellt sind.

9. Brille nach Anspruch 8, wobei der Zwischenabschnitt (30) ein flexibles starres metallisches Stück (38) aufweist, das sich zwischen dem ersten elastischen Abschnitt und dem zweiten elastischen Abschnitt erstreckt und daran angebracht ist.

10. Brille nach Anspruch 7, wobei sie ferner ein flexibles einstückiges elastisches Element (36) aufweist, das erste und zweite Enden definiert und mit einem starren Element verstärkt ist, das fest an dem einstückigen elastischen Element zwischen und beabstandet von den ersten und zweiten Enden angebracht ist, wobei der erste elastische Abschnitt zwischen dem ersten Ende und dem starren Element definiert ist, wobei der zweite elastische Abschnitt zwischen dem zweiten Ende und dem starren Element definiert ist und wobei der starre Zwischenabschnitt an der Position des starren Elements definiert ist.

11. Brille nach Anspruch 7, wobei die erste Befestigungseinrichtung (22) und die zweite Befestigungseinrichtung (26) Schlitz- und Zapfengelenkmittel aufweisen, die verriegelnd mit komplementären Schlitz- und Zapfengelenkmitteln in Eingriff sind, die am Bügel bzw. am Rahmen vorgesehen sind.

12. Brille nach Anspruch 7, wobei sie ferner ein Paar Nuten (46, 48) aufweist, die jeweils an jeder Seite des benachbarten Zwischenabschnitts vorgesehen sind und dem ersten elastischen Abschnitt und dem zweiten elastischen Abschnitt gestatten, in Richtung auf und gegen den Zwischenabschnitt zusammen zu klappen.

13. Brille nach Anspruch 7, wobei die ausgespreizte Position jedes der Bügel (14, 16) einen spitzen Winkel relativ zu ihrer operativen Position bildet.

14. Brille nach Anspruch 13, wobei der optimale Wert des spitzen Winkels zwischen 30 und 60° beträgt.

15. Brille nach Anspruch 14, wobei der optimale Wert des spitzen Winkels etwa 45° beträgt.

## Revendications

1. Charnière (18, 20) pour une utilisation sur des lunettes (10) comprenant un cadre frontal (12) pour supporter des lentilles et une paire de branches (14, 16), dans laquelle ladite charnière comprend : un premier dispositif d'attache (22) pour attacher ladite charnière à l'une desdites branches qui lui correspond; un second dispositif d'attache (26) pour attacher ladite charnière audit cadre; **caractérisée en ce qu'** elle comprend une portion intermédiaire rigide (30) comprenant un membre rigide inflexible (38); une première portion résiliente (32) flexible portant ledit premier dispositif d'attache (22) et attachée à ladite portion intermédiaire rigide; et une seconde portion résiliente (34) flexible portant ledit second dispositif d'attache (26) et attachée à ladite portion intermédiaire rigide qui est à l'opposé de ladite première portion résiliente.

2. Charnière selon la revendication 1, dans laquelle ladite première portion résiliente (32) et ladite seconde portion résiliente (34) sont faites d'un matériau polymérique ayant une résilience intrinsèque.

3. Charnière selon la revendication 2, dans laquelle ladite portion intermédiaire (30) comprend une pièce métallique rigide (38) s'étendant entre ladite première portion résiliente et ladite seconde portion résiliente et attachée à celles-ci.

4. Charnière selon la revendication 1, comprenant en outre un membre résilient unitaire (36) flexible définissant une première et une seconde extrémités et renforcé avec un élément rigide attaché fixement audit membre résilient unitaire entre lesdites première et seconde extrémités et espacé par rapport à celles-ci, ladite première portion résiliente étant définie entre ladite première extrémité et ledit élément rigide, ladite seconde portion résiliente étant définie entre ladite seconde extrémité et ledit élément rigide, et ladite portion intermédiaire rigide étant définie à la position dudit élément rigide.

5. Charnière selon la revendication 1, dans laquelle lesdites branches (14, 16) et ledit cadre (12) comprennent un moyen complémentaire d'attache à tenon et mortaise (24, 28), respectivement, et dans laquelle ledit premier dispositif d'attache et ledit second dispositif d'attache comprennent un moyen d'attache à tenon et mortaise (22, 26) pour un emboîtement avec ledit moyen complémentaire d'attache à tenon et mortaise compris par lesdites branches et ledit cadre, respectivement.

6. Charnière selon la revendication 1, comprenant en outre une paire de rainures (46, 48), positionnées de part et d'autre d'une dite portion intermédiaire adjacente, permettant à ladite première portion résiliente et à ladite seconde portion résiliente de se mouvoir vers ladite portion intermédiaire et d'entrer en contact avec celle-ci.

7. Lunettes (10) comprenant un cadre frontal (12) pour supporter des lentilles sur le nez d'un usager, une paire de branches (14, 16) et une paire de charnières (18, 20) selon la revendication 1, chacune desdites charnières reliant l'une desdites branches qui lui correspond audit cadre, dans lesquelles chacune desdites branches peut être orientée à l'aide de l'une desdites charnières qui lui correspond par rapport audit cadre entre une position de rangement, dans laquelle ladite branche ne subit aucune force provenant de ladite charnière et dans laquelle ladite branche est orientée pour être adjacente audit cadre; une position d'opération dans laquelle ladite branche est orientée en éloignement par rapport audit cadre et est substantiellement perpendiculaire au plan général dudit cadre, et est rappelée vers ladite position de rangement sous l'effet d'une première force de rappel exercée par ladite première portion résiliente et par ladite seconde portion résiliente; et une position ouverte, dans laquelle ladite branche est orientée vers l'extérieur en éloignement par rapport audit cadre au-delà de ladite position d'opération et est rappelée vers ladite position de rangement sous l'effet d'une seconde force de rappel exercée par ladite première et ladite seconde portions résilientes, ladite seconde force de rappel étant supérieure à ladite première force de rappel.

8. Lunettes selon la revendication 7, dans lesquelles ladite première portion résiliente (32) et ladite seconde portion résiliente (34) sont faites d'un matériau polymérique ayant une résilience intrinsèque.

9. Lunettes selon la revendication 8, dans lesquelles ladite portion intermédiaire (30) comprend une pièce métallique rigide (38) flexible s'étendant entre ladite première portion résiliente et ladite seconde portion résiliente et attachée à celles-ci.

10. Lunettes selon la revendication 7, comprenant en outre un membre résilient unitaire (36) flexible définissant une première et une seconde extrémités et renforcé avec un élément rigide attaché fixement audit membre résilient unitaire entre lesdites première et seconde extrémités et espacé par rapport à celles-ci, ladite première portion résiliente étant définie entre ladite première extrémité et ledit élément rigide, ladite seconde portion résiliente étant définie entre ladite seconde extrémité et ledit élément rigide, et ladite portion intermédiaire rigide étant définie à la position dudit élément rigide.

11. Lunettes selon la revendication 7, dans lesquelles ledit premier dispositif d'attache (22) et ledit second dispositif d'attache (26) comprennent un moyen d'attache à tenon et mortaise emboîté avec un moyen d'attache à tenon et mortaise complémentaire compris sur ladite branche et ledit cadre, respectivement.

12. Lunettes selon la revendication 7, comprenant en outre une paire de rainures (46, 48), positionnées de part et d'autre d'une dite portion intermédiaire adjacente, permettant à ladite première portion résiliente et à ladite seconde portion résiliente de se mouvoir vers ladite portion intermédiaire et d'entrer en contact avec celle-ci.

13. Lunettes selon la revendication 7, dans lesquelles ladite position ouverte de chacune desdites branches (14, 16) forme un angle aigu par rapport à leur dite position d'opération.

14. Lunettes selon la revendication 13, dans lesquelles ladite valeur optimale dudit angle aigu est comprise entre 30 et 60 °.

15. Lunettes selon la revendication 14, dans lesquelles ladite valeur optimale dudit angle aigu est d'environ 45°.
